# EUROPEAN PATENT APPLICATION

(11) **EP 4 528 693 A1**
(43) Date of publication of application: **26.03.2025**
(21) Application number: 24194907.2
(22) Date of filing: 16.08.2024
(51) Int. Cl.: G09B 9/00, B60W 40/00, B60W 40/10, G09B 9/04, G09B 9/042, G09B 9/05

(54) **A ROAD TRIP RECORDING AND REPRODUCTION METHOD AND SYSTEM FOR A VEHICLE**

(30) Priority: 20.09.2023 CN 202311221522
(71) Applicant: Bayerische Motoren Werke Aktiengesellschaft, 80809 München (DE)
(72) Inventor: Zhou, Biyun, Shanghai, 200433 (CN)

(57) **Abstract**

The invention provides a road trip reproduction method and system for a vehicle, the method comprising: obtaining sensor data collected at a time interval over a road trip, the sensor data comprising image data and sound data about the surroundings of the vehicle, and vehicle status data; calculating corresponding vehicle dynamic response parameters and vehicle cornering response parameters based on the vehicle status data; simulating a physical controller based on the vehicle status data and corresponding vehicle dynamic response parameters and vehicle cornering response parameters, the physical controller being used to simulate dynamic response and cornering response when driving the vehicle on the road trip; and reproducing the road trip using the obtained image data, sound data, and the simulated physical controller. Additionally, the invention also provides a vehicle with the above road trip reproduction function.

## Description

### FIELD OF THE INVENTION

The invention relates to the field of intelligent cabin, and more specifically, to a road trip recording and reproduction method and system for a vehicle.

### BACKGROUND OF THE INVENTION

Currently, vehicles are usually driven in set driving modes (for example, economy mode (low energy consumption, reduced torque output), sports mode (increased torque output at the same throttle opening, improved throttle response sensitivity), personal mode (personalized driving characteristic settings), etc.).

However, these driving modes are limited by vehicles' design and construction (for example, vehicles' mass, wheelbase, height of center of gravity, etc.), understeer (for example, maximum lateral acceleration) or oversteer, engine performance (for example, maximum powertrain power), inability to adjust torque, etc. As a result, based on these limitations, it may not be possible to obtain a desired driving experience on a road trip.

Therefore, it is desired to provide a road trip recording and reproduction solution for a vehicle, so that a user can obtain an immersive in-vehicle driving experience in a virtual world without being constrained by design and construction of the vehicle itself.

### SUMMARY OF THE INVENTION

The present summary is provided to introduce some concepts that will be further described in the following specific embodiments in a simplified form. The present summary is not intended to identify key features or essential features of the claimed subject matter, nor is it intended to help determine the scope of the claimed subject matter.

According to a first aspect of the present invention, a road trip reproduction method for a vehicle is provided, the method comprising: obtaining sensor data collected at a time interval over a road trip, the sensor data comprising image data and sound data about the surroundings of the vehicle, and vehicle status data; calculating corresponding vehicle dynamic response parameters and vehicle cornering response parameters based on the vehicle status data; simulating a physical controller based on the vehicle status data and corresponding vehicle dynamic response parameters and vehicle cornering response parameters, the physical controller being used to simulate dynamic response and cornering response when driving the vehicle on the road trip; and reproducing the road trip using the obtained image data, sound data, and the simulated physical controller.

In the technical solution of the embodiment of the present invention, by recording vehicle status through sensor data collected on a road trip, calculating dynamic response and cornering response based on the vehicle status, and reproducing an immersive in-vehicle driving experience in a virtual world using a recreated sound environment, external environment, and simulated physical controller based on these response parameters, user driving experience can be further improved.

According to an embodiment of the present invention, the method further comprising: optimizing vehicle dynamic response parameters and vehicle cornering response parameters corresponding to the vehicle status data based on the selected vehicle model; and simulating a physical controller based on the vehicle status data and corresponding vehicle dynamic response parameters and vehicle cornering response parameters further comprising: simulating the physical controller for the selected vehicle model based on the vehicle status data and corresponding optimized vehicle dynamic response parameters and vehicle cornering response parameters, the physical controller being used to simulate dynamic response and cornering response when driving a vehicle of the selected vehicle model on the road trip.

In the technical solution of the embodiment of the present invention, response parameters (for example, motor torque demand, brake pressure demand) can be optimized by selecting a vehicle model to simulate a physical controller for the selected vehicle model, thereby being able to obtain driving experience of different vehicle models while recreating a road trip in a virtual world.

According to a further embodiment of the present invention, the collected image data is 360-degree external surround view image data of the vehicle with respect to the road trip.

According to a further embodiment of the present invention, the collected sound data is 360-degree external ambient sound data of the vehicle with respect to the road trip.

According to a further embodiment of the present invention, the sensor data is collected at 10ms time intervals.

According to a further embodiment of the present invention, the vehicle status data comprises one or more of accelerator pedal position, brake pedal position, steering angle, yaw rate, lateral acceleration, longitudinal acceleration, vehicle speed, or tire-road friction coefficient.

According to a further embodiment of the present invention, calculating corresponding vehicle dynamic response parameters further comprising: calculating corresponding vehicle dynamic response parameters with respect to wheel torque demand based on accelerator pedal position or brake pedal position of the vehicle.

According to a further embodiment of the present invention, calculating corresponding vehicle cornering response parameters based on the vehicle status data further comprising: calculating corresponding vehicle cornering response parameters with respect to reference yaw rate based on steering angle, lateral acceleration, vehicle speed, and tire-road friction coefficient of the vehicle.

According to a further embodiment of the present invention, the optimized vehicle dynamic response parameters and vehicle cornering response parameters comprise reference yaw moment, motor torque demand and brake pressure demand.

According to a further embodiment of the present invention, reproducing the road trip using the obtained image data, sound data, and the simulated physical controller further comprising: recreating an external environment of the road trip by playing back the obtained image data, sound data; and simulating driving on the road trip using the physical controller simulated for the selected vehicle model.

According to a second aspect of the present invention, a road trip reproduction system for a vehicle is provided, the system comprising: a data acquisition means for obtaining sensor data collected at a time interval over a road trip, the sensor data comprising image data and sound data about the surroundings of the vehicle, and vehicle status data; a response computation means for calculating corresponding vehicle dynamic response parameters and vehicle cornering response parameters based on the vehicle status data; a controller simulation means for simulating a physical controller based on the vehicle status data and corresponding vehicle dynamic response parameters and vehicle cornering response parameters, the physical controller being used to simulate dynamic response and cornering response when driving the vehicle on the road trip; and a road trip reproduction means for reproducing the road trip using the obtained image data, sound data, and the simulated physical controller.

According to an embodiment of the present invention, the system further comprising a parameter optimization means for optimizing the vehicle dynamic response parameters and the vehicle cornering response parameters corresponding to the vehicle status data based on a selected vehicle model; and the controller simulation means further used for simulating the physical controller for the selected vehicle model based on the vehicle status data and corresponding optimized vehicle dynamic response parameters and vehicle cornering response parameters, the physical controller being used to simulate dynamic response and cornering response when driving a vehicle of the selected vehicle model on the road trip.

According to a third aspect of the present invention, a vehicle with the above road trip reproduction function is provided, the vehicle comprising: a sensor system for collecting sensor data at a time interval over a road trip, the sensor data comprising image data and sound data about the surroundings of the vehicle, and vehicle status data; display and sound system for playing back the obtained image data and sound data on the road trip to recreate an external environment of the road trip; and the road trip reproduction system of any of aspects above.

According to an embodiment of the present invention, the sensor system comprises a front camera, side cameras, a rear camera for collecting image data about the surroundings of the vehicle, and external microphones for collecting sound data about the surroundings of the vehicle.

According to a fourth aspect of the present invention, a computer-readable storage medium storing instructions is provided that, when executed, cause a vehicle to perform the method of any one of aspects above.

These and other features and advantages will become apparent by reading the following detailed description and referring to the associated accompanying drawings. It should be understood that the foregoing summary of the invention and the following detailed description are merely illustrative and are not intended to limit the claimed aspects.

### BRIEF DESCRIPTION OF THE DRAWINGS

To well understand the above features of the present invention in details, reference can be made to various embodiments, so as to describe the summary of the invention above more specifically, some aspects of which are depicted in the accompanying drawings. However, it should be noted that the accompanying drawings only show some typical aspects of the present invention, and thus should not be considered as limiting the scope of the present invention, because this description may allow other equivalent aspects.
FIG. 1 shows a schematic architectural diagram of a road trip reproduction system for a vehicle according to an embodiment of the present invention.
FIG. 2 shows a schematic flow chart of controller simulation for a selected vehicle model according to an embodiment of the present invention.
FIG. 3 shows a schematic diagram of a scenario of an immersive in-vehicle driving experience for a selected vehicle model using a road trip reproduction system according to an embodiment of the present invention.
FIG. 4 shows a schematic architectural diagram of a road trip reproduction method for a vehicle according to an embodiment of the present invention.
FIG. 5 shows an exemplary vehicle supporting road trip recording and reproduction according to an embodiment of the present invention.
FIG. 6 shows a schematic architectural diagram of a road trip reproduction system according to an embodiment of the present invention.

### DETAILED DESCRIPTION

The present invention will be described in detail below in conjunction with the accompanying drawings, and the characteristics of the present invention will be further shown in the following detailed description. The term "vehicle" as used throughout this description refers to any type of automobile including, but not limited to, cars, vans, trucks, buses, etc. For simplicity, the present invention is described in terms of "vehicle". The term "A or B" as used in the description means "A and B" and "A or B" and does not imply that A and B are exclusive, unless otherwise specified.

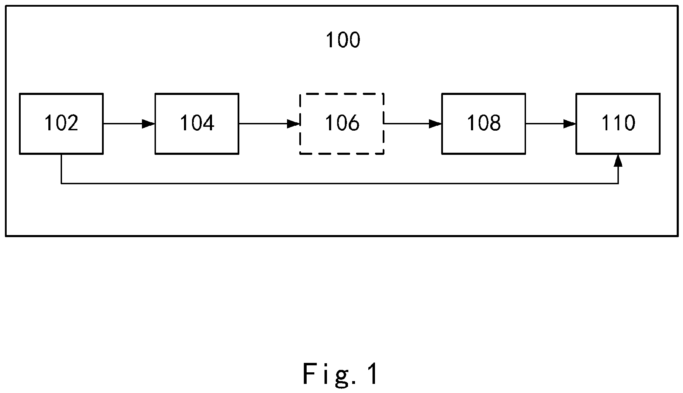

FIG. 1 shows a schematic architectural diagram of a road trip reproduction system 100 for a vehicle according to an embodiment of the present invention. As shown in FIG. 1, the road trip reproduction system 100 may include at least a data acquisition means 102, a response computation means 104, a controller simulation means 108 and a road trip reproduction means 110. Preferably, the road trip reproduction system 100 may further comprise a parameter optimization means 106.

The data acquisition means 102 can obtain sensor data collected at a time interval over a road trip, the sensor data comprising image data and sound data about the surroundings of the vehicle, and vehicle status data.

In one embodiment, the collected image data may be 360-degree external surround view image data with respect to the surroundings of the vehicle collected over the road trip.

In one embodiment, the collected sound data may be 360-degree external ambient sound data of the vehicle collected over the road trip.

For example, the 360-degree external surround view image data and 360-degree external ambient sound data described above may be recorded and stored, and may be played back after the road trip is over so as to recreate an external environment and sound of the road trip.

In one embodiment, the sensor data may be collected at 10ms time intervals. It should be understood that the above time intervals may be predefined, in other words, sensor data may be collected at any suitable time intervals.

In one embodiment, the vehicle status data may comprise one or more of accelerator pedal position, brake pedal position, steering angle, yaw rate, lateral acceleration, longitudinal acceleration, vehicle speed, or tire-road friction coefficient.

The response computation means 104 may calculate corresponding vehicle dynamic response parameters and vehicle cornering response parameters based on the recorded vehicle status data.

In one embodiment, the response computation means 104 may calculate corresponding vehicle dynamic response parameters with respect to wheel torque demand based on accelerator pedal position or brake pedal position of the vehicle.

In one embodiment, the response computation means 104 may calculate corresponding vehicle cornering response parameters with respect to reference yaw rate based on steering angle, lateral acceleration, vehicle speed, and tire-road friction coefficient of the vehicle.

The parameter optimization means 106 may optimize the vehicle dynamic response parameters and the vehicle cornering response parameters corresponding to the vehicle status data based on a selected vehicle model. The optimized vehicle dynamic response parameters and vehicle cornering response parameters may be subsequently used to simulate a physical controller for the selected vehicle model.

In one embodiment, the optimized vehicle dynamic response parameters and vehicle cornering response parameters may comprise reference yaw moment, motor torque demand and brake pressure demand.

Of course, it should be understood that the vehicle dynamic response parameters and the vehicle cornering response parameters may be any other response parameters known to those skilled in the art.

The controller simulation means 108 may simulate a physical controller based on the vehicle status data and corresponding vehicle dynamic response parameters and vehicle cornering response parameters, the physical controller being used to simulate dynamic response and cornering response when driving the vehicle on the road trip.

Preferably, upon the vehicle dynamic response parameters and vehicle cornering response parameters being optimized for the selected vehicle model, a physical controller for the selected vehicle model may be simulated based on the vehicle status data and corresponding optimized vehicle dynamic response parameters and vehicle cornering response parameters, the physical controller being used to simulate dynamic response and cornering response when driving a vehicle of the selected vehicle model on the road trip.

The road trip reproduction means 110 may use the obtained image data, sound data with respect to the surroundings of the vehicle, and the simulated physical controller to reproduce the road trip.

Specifically, the road trip reproduction means 110 may recreate an external environment of the recorded road trip by playing back the recorded image data (for example, 360-degree surround view image) and sound data (for example, 360-degree external ambient sound), and may use the physical controller simulated for the selected vehicle model to simulate driving experience on the road trip.

For example, the above driving simulation may be achieved by an existing steering wheel and accelerator/brake pedal at a driver's seat of a vehicle, or it may also be achieved by an additionally provided (for example, provided at a passenger's seat) steering wheel and accelerator/brake pedal.

As a result, an immersive in-vehicle driving experience in a virtual world can be achieved by recreating an external surround view image and ambient sound of the recorded road trip and utilizing a simulated physical controller (for example, a physical controller optimized for a selected vehicle model), so as to further enhance vehicle entertainment and interactivity and to improve user experience.

Those skilled in the art may understand that, the road trip reproduction system of the present invention can be implemented either in hardware or in software, and the modules can be merged or combined in any suitable manner.

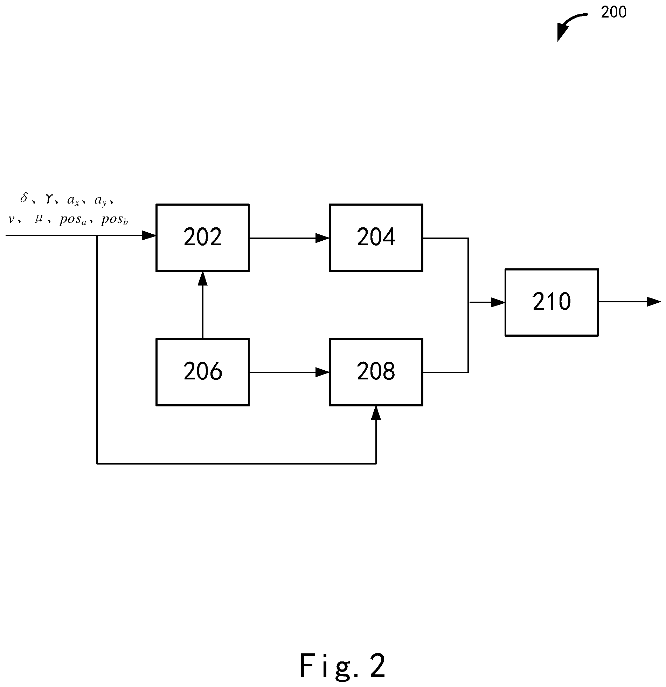

FIG. 2 shows a schematic flow chart of controller simulation 200 for a selected vehicle model according to an embodiment of the present invention.

As shown in FIG. 2, vehicle status data collected over a recorded road trip may be sent to data processor 202 so as to calculate corresponding vehicle dynamic response parameters and vehicle cornering response parameters at each moment.

For example, the vehicle status data may comprise one or more of steering angle *δ* (deg), yaw rate *γ*(deg/s), longitudinal acceleration *aₓ*(m/s²), lateral acceleration *a_{y}*(m/s²), vehicle speed v(km/h), tire-road friction coefficient *µ*, accelerator pedal position *posₐ* ,brake pedal position *pos_{b}* .

The calculated vehicle dynamic response parameters may comprise wheel torque demand *T_{w}*(kw) and reference yaw rate *γ*_{ref}(deg/s).

Specifically, the corresponding vehicle dynamic response parameters with respect to wheel torque demand may be calculated based on accelerator pedal position *posₐ* or brake pedal position *pos_{b}* of the vehicle.

In addition, the corresponding cornering response parameters with respect to reference yaw rate γ*_{ref}* may be calculated based on steering angle *δ*, lateral acceleration *a_{y}*, vehicle speed v, and tire-road friction coefficient of the vehicle.

These calculated dynamic response parameters and cornering response parameters may be sent to a feedback controller 204 for subsequent optimization.

Subsequently, a vehicle model for subsequent driving experience may be selected through a vehicle model selector 206. The vehicle dynamic response parameters and vehicle cornering response parameters corresponding to the vehicle status data may be optimized for the selected vehicle model, and these parameters may be sent to a feed-forward controller 208 for optimization to obtain an optimized reference yaw moment, motor torque demand, and brake pressure demand.

These optimized parameters may then be sent to a simulator 210 to simulate a physical controller for the selected vehicle model for subsequent driving experience in a virtual world.

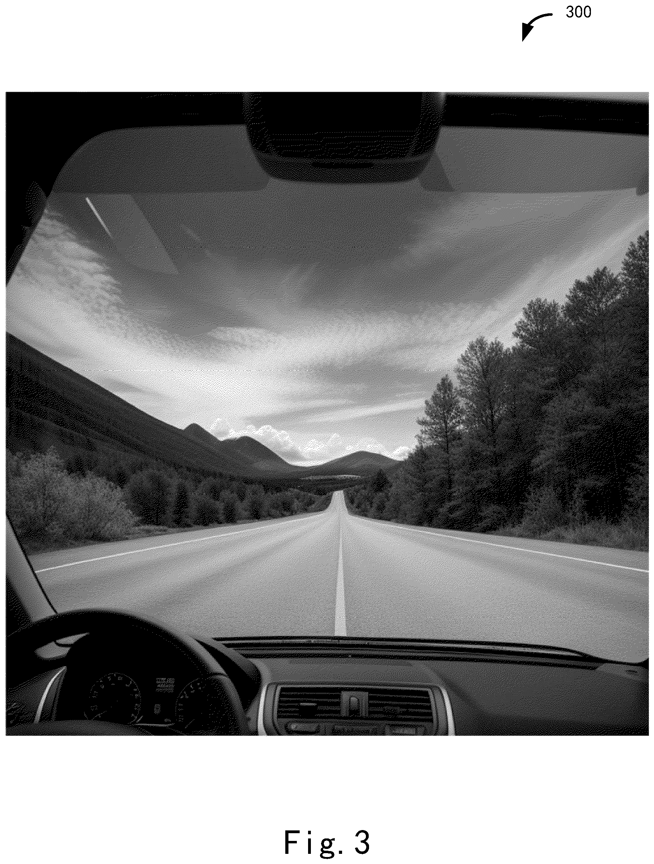

FIG. 3 shows a schematic diagram of a scenario 300 of an immersive in-vehicle driving experience for a selected vehicle model using a road trip reproduction system according to an embodiment of the present invention. In scenario 300, user can immersively experience a recorded road trip (for example, a trip on a national highway) through a virtual, full-view projection.

As described with reference to FIGS. 1 and 2, external environment data and sound data can first be obtained based on sensor data collected and recorded over a selected road trip (desired road trip), and vehicle dynamic response and cornering response can be calculated for each moment of the road trip, and these response parameters can then be optimized based on a user's selected vehicle model (desired model), and the optimized parameters can be sent to a simulator to simulate a physical controller for the selected vehicle model.

Subsequently, as shown in scenario 300, an external environment of the road trip may be recreated by playing back the obtained image data and sound data, and the driving on the road trip may be simulated using the physical controller simulated for the selected vehicle model.

As a result, a more immersive driving experience can be obtained by, for example, performing a full-view projection on a front windshield and utilizing a physical controller for a selected vehicle model to simulate driving on a selected road trip, which can further enhance interactivity and entertainment between users and vehicles.

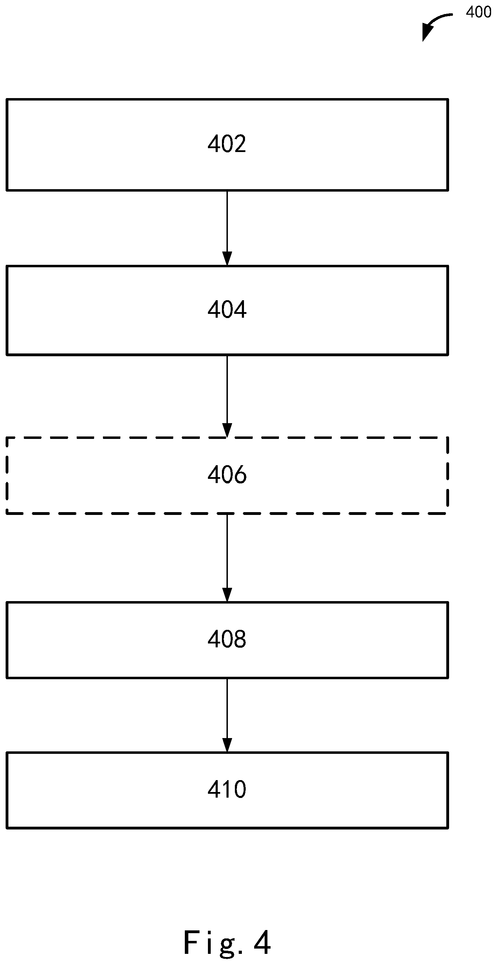

FIG. 4 shows a schematic architectural diagram of a road trip reproduction method 400 for a vehicle according to an embodiment of the present invention.

The method 400 begins at step 402, the data acquisition means 102 can obtain sensor data collected at a time interval over a road trip, the sensor data may comprise image data and sound data about the surroundings of the vehicle, and vehicle status data.

In one embodiment, the image data may be 360-degree external surround view image data of the vehicle with respect to the recorded road trip. The sound data may be 360-degree external ambient sound data of the vehicle with respect to the recorded road trip.

In one embodiment, the vehicle status data may be collected at 10ms time intervals. The above time intervals may be predefined.

In one embodiment, the vehicle status data may comprise one or more of accelerator pedal position, brake pedal position, steering angle, yaw rate, lateral acceleration, longitudinal acceleration, vehicle speed, or tire-road friction coefficient.

At step 404, the response computation means 104 may calculate corresponding vehicle dynamic response parameters and vehicle cornering response parameters based on the vehicle status data.

In one embodiment, the response computation means 104 may calculate corresponding vehicle dynamic response parameters with respect to wheel torque demand based on accelerator pedal position or brake pedal position of the vehicle, as shown above with reference to FIG. 2.

In one embodiment, the response computation means 104 may calculate corresponding vehicle cornering response parameters with respect to reference yaw rate based on steering angle, lateral acceleration, vehicle speed, and tire-road friction coefficient of the vehicle, as shown above with reference to FIG. 2.

Preferably, at step 406, the parameter optimization means 106 may optimize the vehicle dynamic response parameters and the vehicle cornering response parameters corresponding to the vehicle status data based on a selected vehicle model.

In one embodiment, the optimized vehicle dynamic response parameters and vehicle cornering response parameters comprise reference yaw moment, motor torque demand and brake pressure demand.

At step 408, the controller simulation means 108 may simulate a physical controller based on the vehicle status data and corresponding vehicle dynamic response parameters and vehicle cornering response parameters, the physical controller may be used to simulate dynamic response and cornering response when driving the vehicle on the selected road trip.

In the case where the response parameters of the vehicle have been optimized for the selected vehicle model, the controller simulation means 108 may simulate the physical controller for the selected vehicle model based on the vehicle status data and the corresponding optimized vehicle dynamic response parameters and vehicle cornering response parameters, the physical controller may be used to simulate dynamic response and cornering response when driving the vehicle of the selected vehicle model on the selected road trip.

At step 410, the road trip reproduction means 110 may use the obtained image data, sound data, and the simulated physical controller to reproduce the road trip.

In one embodiment, the road trip reproduction means 110 may recreate an external environment of the road trip by playing back the obtained image data and sound data, and the driving on the road trip may be simulated using the physical controller simulated for the selected vehicle model.

As a result, by collection of sensor signals, calculation of vehicle response parameters and simulation of a physical controller for a selected vehicle model, a recorded road trip can be reproduced and a user can obtain an immersive driving pleasure of driving a desired vehicle model.

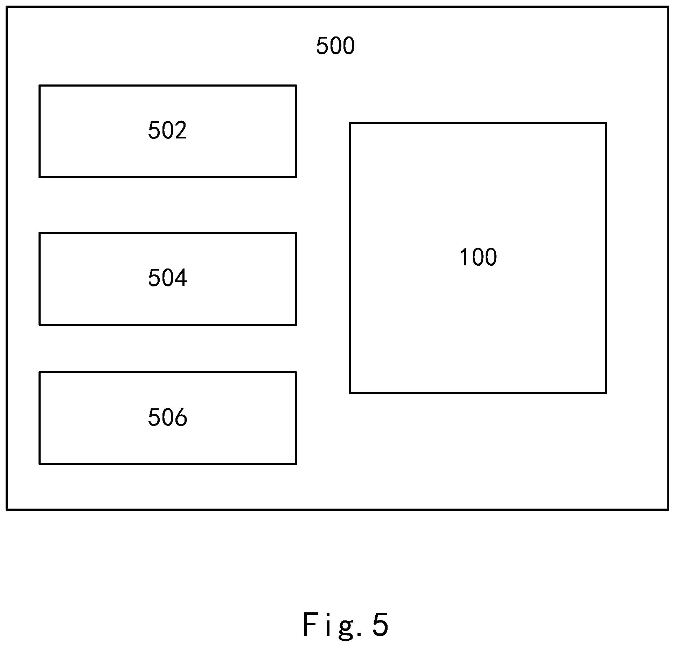

FIG. 5 shows an exemplary vehicle 500 supporting road trip recording and reproduction according to an embodiment of the present invention. The vehicle 500 may include a sensor system 502.

The sensor system 502 may comprise a front camera (for example, 1x), side cameras (for example, 2x), a rear camera (for example, 1x) for collecting image data about the surroundings of the vehicle, and external microphones for collecting sound data about the surroundings of the vehicle.

In addition, the sensor system 502 may also comprise, for example, an inertial sensor ( for example, an inertial measurement unit, IMU), a wheel speed sensor, a steering wheel angle sensor, a steering torque sensor, a tire pressure sensor, a brake pressure sensor, etc.

The sensor system 502 may be used for collecting sensor data at a predefined time interval over a road trip desired to be recorded, the sensor data comprising image data and sound data about the surroundings of the vehicle, and vehicle status data.

The recorded image data and sound data may be stored for subsequent playback.

The vehicle 500 may also include a display system 504 and a sound/audio system 506. Display system 504 may be used for playing back the image data obtained over the road trip to recreate an external environment of the road trip. Sound/audio system 506 may be used for playing back the sound data obtained over the road trip to recreate an external ambient sound of the road trip.

For example, virtual reality technology can be used to project external environment images obtained over the road trip onto a front windshield for a more immersive experience.

In addition, the vehicle 500 may also include a road trip reproduction system 100 as shown in FIG. 1, which can obtain sensor data collected at a time interval over a road trip, the sensor data comprising image data and sound data about the surroundings of the vehicle, and vehicle status data; calculate corresponding vehicle dynamic response parameters and vehicle cornering response parameters based on the obtained vehicle status data; simulate a physical controller based on the vehicle status data and corresponding vehicle dynamic response parameters and vehicle cornering response parameters, the physical controller being used to simulate dynamic response and cornering response when driving the vehicle on the road trip; and reproduce the road trip using the obtained image data, sound data, and the simulated physical controller.

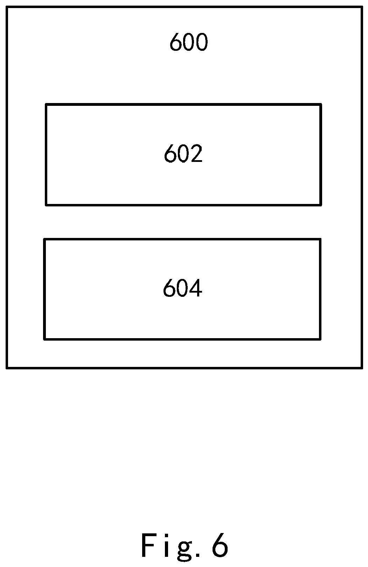

FIG. 6 shows a schematic architectural diagram of a road trip reproduction system 600 according to an embodiment of the present invention. As shown in FIG. 6, the system 600 may include a memory 602 and at least one processor 604. Memory 602 may include RAM, ROM, or a combination thereof. The memory 602 may store computer executable instructions that, when executed by at least one processor 604, cause the at least one processor 604 to execute various functions described herein, comprising: obtaining sensor data collected at a time interval over a road trip, the sensor data comprising image data and sound data about the surroundings of the vehicle, and vehicle status data; calculating corresponding vehicle dynamic response parameters and vehicle cornering response parameters based on the obtained vehicle status data; simulating a physical controller based on the vehicle status data and corresponding vehicle dynamic response parameters and vehicle cornering response parameters, the physical controller being used to simulate dynamic response and cornering response when driving the vehicle on the road trip; and reproducing the road trip using the obtained image data, sound data, and the simulated physical controller. In some cases, the memory 602 may, in particular, comprise a BIOS that controls basic hardware or software operations, such as interactions with peripheral components or devices. Processor 604 may include intelligent hardware devices (for example, general-purpose processors, DSPs, CPUs, microcontrollers, ASICs, FPGAs, programmable logic devices, discrete gate or transistor logic components, discrete hardware components, or any combination thereof).

The functions described herein may be implemented in hardware, software executed by a processor, firmware, or any combination thereof. If implemented in software executed by a processor, the respective functions may be stored on or transferred by means of a computer-readable medium as one or more instructions or codes. Other examples and implementations fall within the scope of the present disclosure and the appended claims. For example, due to the nature of software, the functions described herein may be implemented in software executed by a processor, hardware, firmware, hardwiring, or any combination thereof. Features that implement the functions may also be physically located at various locations, including being distributed so that portions of the functions are implemented at different physical locations.

The content already described above includes examples of various aspects of the claimed subject matter. Of course, it is impossible to describe every conceivable combination of components or methods for the purpose of depicting the claimed subject matter, but those of ordinary skill in the art should recognize that many further combinations and arrangements of the claimed subject matter are possible. Thus, the subject matter disclosed is intended to cover all such changes, modifications and changes falling within the spirit and scope of the appended claims.

## Claims

1. A road trip reproduction method for a vehicle, comprising:
obtaining sensor data collected at a time interval over a road trip, the sensor data comprising image data and sound data about the surroundings of the vehicle, and vehicle status data;
calculating corresponding vehicle dynamic response parameters and vehicle cornering response parameters based on the vehicle status data;
simulating a physical controller based on the vehicle status data and corresponding vehicle dynamic response parameters and vehicle cornering response parameters, the physical controller being used to simulate dynamic response and cornering response when driving the vehicle on the road trip; and
reproducing the road trip using the obtained image data, sound data, and the simulated physical controller.

2. The method of claim 1, further comprising:
optimizing the vehicle dynamic response parameters and the vehicle cornering response parameters corresponding to the vehicle status data based on a selected vehicle model; and
simulating a physical controller based on the vehicle status data and corresponding vehicle dynamic response parameters and vehicle cornering response parameters further comprising:
simulating the physical controller for the selected vehicle model based on the vehicle status data and corresponding optimized vehicle dynamic response parameters and vehicle cornering response parameters, the physical controller being used to simulate dynamic response and
cornering response when driving a vehicle of the selected vehicle model on the road trip.

3. The method of claim 1, wherein the collected image data is 360-degree external surround view image data of the vehicle with respect to the road trip.

4. The method of claim 1, wherein the collected sound data is 360-degree external ambient sound data of the vehicle with respect to the road trip.

5. The method of claim 1, wherein the sensor data is collected at 10ms time intervals.

6. The method of claim 1, wherein the vehicle status data comprises one or more of accelerator pedal position, brake pedal position, steering angle, yaw rate, lateral acceleration, longitudinal acceleration, vehicle speed, or tire-road friction coefficient.

7. The method of claim 6, wherein calculating corresponding vehicle dynamic response parameters based on the vehicle status data further comprising:
calculating corresponding vehicle dynamic response parameters with respect to wheel torque demand based on accelerator pedal position or brake pedal position of the vehicle.

8. The method of claim 6, wherein calculating corresponding vehicle cornering response parameters based on the vehicle status data further comprising:
calculating corresponding vehicle cornering response parameters with respect to reference yaw rate based on steering angle, lateral acceleration, vehicle speed, and tire-road friction coefficient of the vehicle.

9. The method of claim 2, wherein the optimized vehicle dynamic response parameters and vehicle cornering response parameters comprise reference yaw moment, motor torque demand and brake pressure demand.

10. The method of claim 2, wherein reproducing the road trip using the obtained image data, sound data, and the simulated physical controller further comprising:
recreating an external environment of the road trip by playing back the obtained image data, sound data; and
simulating driving on the road trip using the physical controller simulated for the selected vehicle model.

11. A road trip reproduction system for a vehicle, comprising:
a data acquisition means for obtaining sensor data collected at a time interval over a road trip, the sensor data comprising image data and sound data about the surroundings of the vehicle, and vehicle status data;
a response computation means for calculating corresponding vehicle dynamic response parameters and vehicle cornering response parameters based on the vehicle status data;
a controller simulation means for simulating a physical controller based on the vehicle status data and corresponding vehicle dynamic response parameters and vehicle cornering response parameters, the physical controller being used to simulate dynamic response and cornering response when driving the vehicle on the road trip; and
a road trip reproduction means for reproducing the road trip using the obtained image data, sound data, and the simulated physical controller.

12. The system of claim 11, further comprising a parameter optimization means for optimizing the vehicle dynamic response parameters and the vehicle cornering response parameters corresponding to the vehicle status data based on a selected vehicle model; and
the controller simulation means further for simulating the physical controller for the selected vehicle model based on the vehicle status data and corresponding optimized vehicle dynamic response parameters and vehicle cornering response parameters, the physical controller being used to simulate dynamic response and cornering response when driving a vehicle of the selected vehicle model on the road trip.

13. A vehicle with road trip reproduction function, comprising:
a sensor system for collecting sensor data at a time interval over a road trip, the sensor data comprising image data and sound data about the surroundings of the vehicle, and vehicle status data;
display and sound system for playing back the obtained image data and sound data on the road trip to recreate an external environment of the road trip; and
the road trip reproduction system of any of claims 11-12.

14. The vehicle of claim 13, the sensor system comprises a front camera, side cameras, a rear camera for collecting image data about the surroundings of the vehicle, and external microphones for collecting sound data about the surroundings of the vehicle.

15. A computer-readable storage medium storing instructions that, when executed, cause a vehicle to perform the method of any one of claims 1-10.
